(19)

Europäisches Patentamt

European Patent Office

Office européen des brevets

(11) **EP 0 899 847 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
*H02H 7/085* (2006.01)    *G01P 13/04* (2006.01)

(21) Anmeldenummer: **98112933.1**

(22) Anmeldetag: **11.07.1998**

(54) **Verfahren zur Erkennung der Position und der Bewegungsrichtung eines bewegbar gelagerten Teils an einem elektrischen Motor**

Method for determining the position and the direction of movement of a movable part driven by an electric motor

Procédé pour la détermination de la position et de la direction du mouvement d'une partie mobile entraînée par un moteur électrique

(84) Benannte Vertragsstaaten:
**DE ES FR GB IT SE**

(30) Priorität: **02.08.1997 DE 19733581**

(43) Veröffentlichungstag der Anmeldung:
**03.03.1999 Patentblatt 1999/09**

(73) Patentinhaber: **Conti Temic microelectronic GmbH**
**90411 Nürnberg (DE)**

(72) Erfinder:
• **Schulter, Wolfgang, Dr.**
**88709 Meersburg (DE)**

• **Driendl, Dieter**
**88693 Deggenhausertal (DE)**
• **Kimpfler, Stephan**
**88094 Oberteuringen (DE)**
• **Kessler, Erwin**
**88348 Saulgau-Bolstern (DE)**
• **Kleiner, Kurt**
**88605 Messkirch (DE)**

(56) Entgegenhaltungen:
**EP-A- 0 359 853          EP-A- 0 603 506**
**DE-A- 4 315 637**

• **PATENT ABSTRACTS OF JAPAN vol. 013, no. 138 (P-852), 6. April 1989 -& JP 63 304307 A (HITACHI LTD;OTHERS: 01), 12. Dezember 1988**

**Beschreibung**

Die Erfindung betrifft ein verfahren zur Erkennung der Position und der Bewegungsrichtung eines bewegbar gelagerten Teils, das insbesondere bei der fremdkraftbetätigten Verstellung von Schließteilen in Kraftfahrzeugen, z.B. bei einem elektrisch angetriebenen Fensterheber mit Einklemmschutz angewendet werden kann.

Bekannte Vorrichtungen zur Positions- und Drehrichtungserkennung verwenden 2-kanalige Sensorsysteme, deren Signale phasenverschoben sind und in einer Elektronikeinheit ausgewertet werden. Die verwendeten Sensoren können nach sehr unterschiedlichen physikalischen Prinzipien (z.B.: elektrisch, magnetisch, induktiv, optisch) arbeiten.

So verwendet der elektromotorische Antrieb gemäß der EP 0 359 853 A1 beispielsweise zwei zueinander winkelversetzte Hall-Sensoren, die einem auf der Ankerwelle befestigten Ringmagneten zugeordnet sind. Bei Drehung der Ankerwelle entstehen zwei entsprechend phasenverschobene, vom HallSensor generierte Signale, die nach Digitalisierung in einer Elektronikeinheit ausgewertet werden und die ausschließliche Grundlage für die Drehrichtungserkennung bilden. Da das entsprechende Signalmuster für jede Drehrichtung charakteristisch (verschieden) ist, lassen sich die Zählimpulse ebenso eindeutig einer Drehrichtung zuordnen.

Da die bekannte technische Lösung jedoch nicht mit weniger als zwei Sensorkanälen auskommt, ist sie nur mit einem entsprechend hohen Aufwand an Bauteilen und Leitungen zu realisieren. Auch der dafür freizuhaltende Bauraum kann sich negativ auswirken und zwar insbesondere bei Verwendung kleiner Antriebseinheiten mit integrierter Elektronik.

Aus JP 63-30 43 07 A ist eine Geschwindigkeitssteuerung für einen motorischen Antrieb bekannt, bei der kontinuierlich die Phasendifferenz zwischen einem betreffenden Geschwindigkeitssteuerungsimpuls und dem Erhöhungsimpuls einer Laserlängenmeßvorrichtung erfaßt wird. Der verwendete Steuerkreis weist außerdem einen Pulswandler und einen Mechanismus zur Umwandlung der Drehbewegung des Motors in eine Linearbewegung auf. Aus der Messung der linearen Bewegung wird in einem Wandler ein up- bzw. down-Signal generiert, und zwar in Abhängigkeit von der Richtung des Stellbefehls.

Die beschriebene Lösung erlaubt zwar eine sehr genaue Steuerung der Verstellgeschwindigkeit eines Objekts, sie ist jedoch nicht geeignet, gleichzeitig auch seine Position festzustellen. Dazu sind weitere Maßnahmen vorzusehen.

Aus der DE 43 15 637 C2 ist des weiteren ein Verfahren zur Erkennung der Position und Bewegungsrichtung bekannt, bei dem neben den Signalflanken des digitalisierten Sensorsignals der Zustand des Antriebes berücksichtigt wird, indem im Falle der Umkehr der Bewegungsrichtung die Signalflanken in Abhängigkeit von einer durch feste prinzipiell empirisch zu ermittelnde oder mathematisch zu berechnende Zeitschwellen begrenzten Nachlaufzeit zugeordnet werden. Eine Anpassung an die sich in starkem Maße ändernden Systembedingungen ist nicht möglich, da der zeitliche Verlauf des Motorstroms bei einer Bewegungsrichtungsumkehr um mehrere Größenordnungen variiert. So ist insbesondere eine Steuerung mit festen Schwellen immer nur auf einen bestimmten Lastfall, maßgeblich bestimmt durch das zu überwindende Masse-Trägheitsmoment, begrenzt. Eine sich beispielsweise durch das Einfrieren oder Klemmen einer Fensterscheibe ergebende Erhöhung führt jedoch zu Abweichungen. In Kraftfahrzeugen kann die Betriebsversorgungsspannung durchaus erheblich absinken, wenn einerseits die Batterie leer ist und zusätzlich noch andere Lastelemente betrieben werden. Wird der Motor, wie bspw. bei Stellantrieben industrieller Werkzeugmaschinen, sehr häufig benutzt, so verändern sich auch die elektrischen Parameter des Motors aufgrund der Erwärmung. Würde man die Zeitschwellen so weit auseinander legen, daß alle diese Fälle noch davon erfaßt werden, so wird eine besonders leichtgängige Stellanordnung bereits mehrere Umdrehungen in die entgegengesetzte Richtung ausführen, ehe dies durch die Schwelle erkannt wird.

Aus der EP 0 603 506 A2 ist ein Verfahren zur Lagebestimmung eines elektromotorisch in zwei Richtungen angetriebenen Teils von Kraftfahrzeugen mit einem Stellungsgeber zu entnehmen, bei dem ein Richtungswechsel in Abhängigkeit von der Dauer einer Pause zwischen zwei Impulsen des Stellungsgebers erkannt werden soll. Durch schnelle Richtungswechsel oder ein ungleichmäßiges und nicht in einem Schritt erfolgendes, stufenförmiges Bewegen des Teils kann es bei einem solchen Verfahren zu Fehlern kommen.

Bekannt ist außerdem, daß das Verhalten von Gleichstrommotoren mittels eines elektromechanischen Motorzustandsmodells basierend auf den Motorengleichungen beschrieben werden kann. Die Motorengleichung $U_q(t) = c_2 \cdot \Phi \cdot n(t)$, auch Generatorgleichung genannt, und die Motorengleichung $M_m(t) = c_1 \cdot \Phi \cdot I_M(t)$ sowie der elektrische Zusammenhang

$$U_q(t) = U_M(t) - I_M(t) \cdot R_a - L \cdot \frac{\partial I_M(t)}{\partial t}$$ können ebenfalls der Literatur, bspw. Lindner u.a.: Nachschlagewerk Elektrotechnik - Elektronik, Leipzig, 2. Aufl. 1983, S. 199 ff. entnommen werden. Die Bezugszeichen bedeuten im einzelnen $U_q$ die induzierte Spannung ; $c_1$, $c_2$ die Motorenkonstanten, $\Phi$ der magnetische Fluß, n die Drehzahl, $M_L$ das Lastmoment, $M_m$ das Motormoment und $M_B$ das sich daraus ergebende Beschleunigungsmoment, $I_M$ den Motorstrom, UM die Motorklemmenspannung, $R_a$ den Ankerwiderstand, $R_k$ den äußeren Klemmenwiderstand, L die Induktivität der Motorwicklung und J das Massen Trägheitsmoment der gesamten rotierenden Anordnung einschließlich der zu bewegenden Teile, bspw. die Fenster.

Aufgabe der Erfindung ist es, ein Verfahren zur Erkennung der Position und der Bewegungsrichtung eines bewegbar gelagerten Teils an einem elektrischen Motor anzugeben, welches sich automatisch an den aktuellen Zustand des Motors anpaßt.

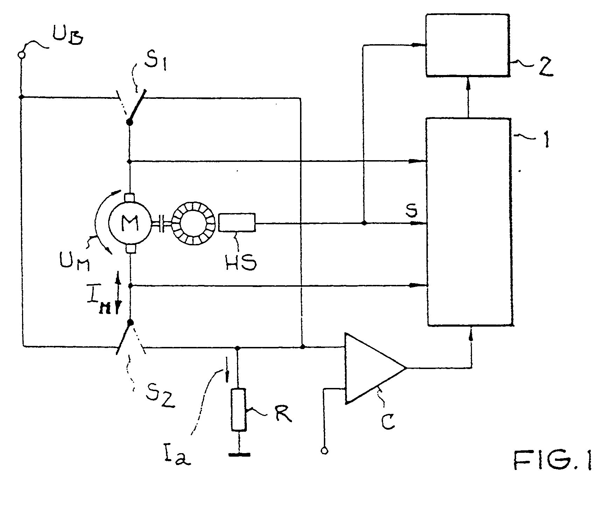

Die Aufgabe ist durch die Merkmale im Patentanspruch 1 gelöst. Vorteilhafte Weiterbildungen der Erfindung sind den Unteransprüchen zu entnehmen. Spätestens mit dem Ansteuern der Schaltmittel zum Umschalten der Motorspannung von einer Bewegungsrichtung in die entgegengesetzte wird mittels einer Meßanordnung (Fig. 1) der Motorstrom erfaßt. Der Zeitpunkt des Maximums des Motorstroms $T+\Delta t_S$ entspricht in etwa dem Zeitpunkt der Richtungsumkehr $T+\Delta t_R$ und die Signalflanken werden von der Auswertelogik entsprechend zur aktuellen Position addiert bzw. subtrahiert. Wesentlich ist hierbei, daß nicht etwa ein Amplitudenwert fest vorgegeben wird, sondern vorzugsweise eine Maximumsbestimmung erfolgt.

So wird vorzugsweise das Motorstrommaximum durch Vergleich jeweils zweier benachbarter Abtastwerte gewonnen. Außerdem wird ein stromschwellwert vorgegeben, unterhalb dem beispielsweise duch Störungen auftretende Stromspitzen ignoriert und nur das Motorstrommaximum an die Auswerteeinheit gemeldet wird, welches den Stromschwellwert übersteigt.

Durch einen Referenzstromwert $I_{a0}$ unmittelbar vor dem Abfallen des Motorstroms in den Vorzeichenwechsel kann außerdem der Stromschwellwert aktuell und auf den jeweiligen Belastungszustand des Motors angepaßt bestimmt werden. Zur Ermittlung des Zeitpunktes $T+\Delta t_S$ des Abfalls des Strommaximums nach dem Vorzeichenwechsel wird jeweils die Differenz zweier benachbarter Abtastwerte des Motorstroms mit einem vorgegebenen Differenzwert verglichen, wenn der Stromschwellwert überschritten wird.

Zur genauen Ermittlung des Stromschwellwertes können der ermittelte Referenzstromwert $I_{a0}$, die aktuelle Drehzahl und Motorspannung, sowie Modellparameter des Motors herangezogen werden.

Vorzugsweise bildet dazu die Recheneinheit ein Motorzustandsmodell nach, wie es sich für den Fachmann aus den Motorengleichungen durch Umformung ergibt. Zur Bestimmung des Stromschwellwertes bei der Umkehr der Bewegungsrichtung wird dabei angenommen, daß das Lastmoment sich über die Zeitdauer des Nulldurchgangs nur unwesentlich ändert.

Vorzugsweise werden die sich nach dem Einbau des Stellmotors nicht mehr verändernden physikalischen Größen des Motorzustandsmodells diesem fest vorgegeben, beispielsweise beim Einbau programmiert. Durch Messen von Motorstrom und -spannung im Anlaufzeitpunkt noch vor Überwindung der Haftreibung kann außerdem der ohmsche Widerstand des Motors recht gut näherungsweise bestimmt werden, da dann noch keine Spannung induziert wird.

Der Fachmann kann zur Ermittlung des Motorstromes zu dem Zeitpunkt, an dem die Drehzahl Null wird, anstelle des durch die Motorengleichungen definierten physikalisch-theoretischen Motorzustandsmodells dieses auch vereinfachen, indem er anstelle der Differentialgleichung zweiter Ordnung, durch welche die Sprungantwort der Drehzahl charakterisiert ist, die Zeitkonstanten und Amplituden der einzelnen Pole hinsichtlich ihrer Größenverhältnisse prüft und ggfs. den Pol mit dem geringeren Einfluß auf das Ergebnis vernachlässigt. Außerdem kann durch ein iteratives Verfahren mit einer Differenzengleichung anstelle der Differentialgleichung der Nullpunkt der Drehzahl schrittweise angenähert werden. Dadurch reduziert sich der Rechenaufwand für die Recheneinheit erheblich.

Indem die Meßanordnung anstelle des Motorstroms den gleichgerichteten Motorstrom erfaßt, kann eine Berücksichtigung der Art der Umkehr der Bewegungsrichtung unterbleiben und die Meßanordnung für beide Fälle identisch verwendet werden. Dazu wird ein Widerstand nach den Schaltmitteln in Richtung Bezugspotential (Masse) angeordnet.

Die Erfindung soll nachfolgend anhand eines Ausführungsbeispiels und der Figuren näher erläutert werden. Kurze Beschreibung der Figuren:

Figur 1     schematische Darstellung der Schaltungsanordnung des Motors sowie der Motorsteuerung

Figur 2     Zeitdiagramm der wichtigsten Systemgrößen

Figur 1 zeigt eine schematische Darstellung der Schaltungsanordnung des Motors M sowie der Motorsteuerung. Der Motor M ist über die zwei Schalter $S_1$, $S_2$ mit der Betriebsspannungsquelle $U_B$ einerseits und zum Bezugspotential (Masse) hin mit dem Widerstand R andererseits verbunden, wobei jeweils genau immer ein Schalter (in Fig.1 ist dies $S_2$) in Richtung der Betriebsspannungsquelle $U_B$, der andere Schalter ($S_1$) in Richtung Bezugspotential (Masse) geschaltet ist. Zum Abschalten des Motors M werden beide Schalter $S_1$, $S_2$ auf Bezugspotential (Masse) gelegt, so daß über dem Motor M die Motorspannung $U_M$ Null ist. Der Motor M weist ein Polrad und einen zugehörigen Hallsensor HS auf, welcher das digitale Signal S direkt an die Auswertelogik 2 sowie an die Meßanordnung 1 liefert. Die Meßanordnung ist ebenfalls mit der Auswertelogik 2 verbunden. Die Meßanordnung 1 erfaßt die Motorspannung $U_M$ sowie den gleichgerichteten Motorstrom $I_a$, in dem der über dem Widerstand R auftretende Spannungsabfall mittels eines Verstärkers C verstärkt wird. Der widerstand R als Abgriff des Motorstroms ist nach den Schaltern $S_1$, $S_2$ auf Bezugspotential (Masse) gelegt, so daß der vom Widerstand R erfaßte Motorstrom $I_a$ gegenüber dem zwischen den Schaltern $S_1$ und $S_2$ fließenden Motorstrom $I_M$ gleichgerichtet ist. Dadurch ist die nachfolgende Meßanordnung 1 unabhängig von der Art der Umkehr der Bewegungsrichtung. Der Widerstand R wirkt in dieser Schaltung als Meß- oder Shunt-Widerstand und wird sehr niederohmig gewählt, um die Leistungsverluste zu minimieren. Die zum gleichgerichteten Motorstrom $I_a$ proportionale Spannung über dem Widerstand R muß folglich zur Verarbeitung in der Meßanordnung 1 geeignet verstärkt werden.

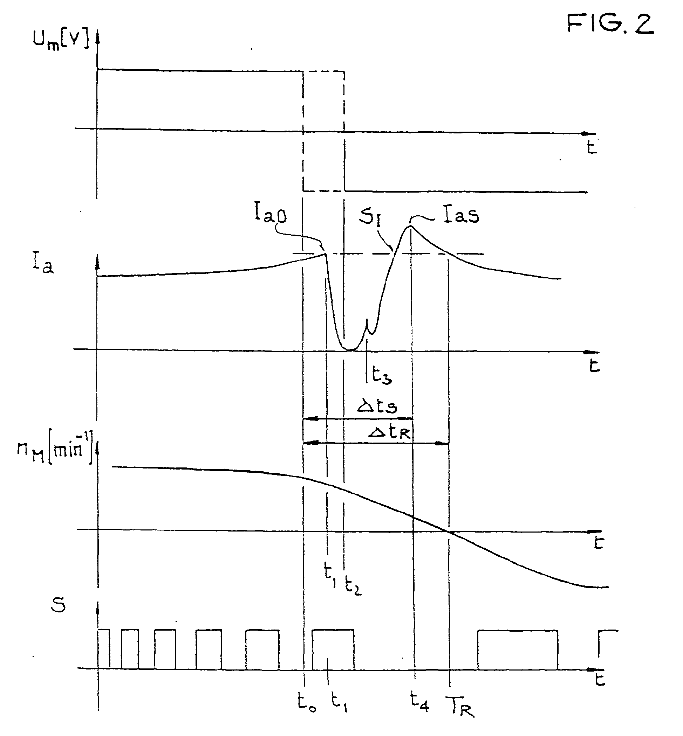

Die Wirkungsweise der Anordnung soll anhand der für die Erfindung wesentlichen Richtungsumkehr in Verbindung mit Fig. 2 erläutert werden.

Fig. 2 zeigt den zeitlichen Ablauf der Motorspannung UM, des gleichgerichteten Motorstroms $I_a$, der Drehzahl $n_M$ sowie das Signal S des Hallsensors während der Drehrichtungsumkehr. Die Drehzahl $n_M$ erreicht erst mit einer Nachlaufzeit $\Delta t_R$ zum Zeitpunkt $T_R$ den Nullpunkt. Das Signal S des Hallsensors gibt mit seinen Signalflanken jeweils eine Umdrehung des Polrades und somit des bewegbar gelagerten Teils an.

Zum Zeitpunkt $t_0$ erfolgt der Befehl zur Umkehr der Bewegungsrichtung an die Schalter $S_1$, $S_2$, worauf die wirksame Motorspannung UM mit einer gewissen Verzögerung (gestrichelt angedeutet) reagiert. Zum Zeitpunkt $t_2$ erreichen beide Schalter den jeweils entgegengesetzten Schaltpunkt. Dadurch kommt es zum Zeitpunkt $t_1$ zu einem Abfall des Motorstroms $I_M$ in den Vorzeichenwechsel bzw. beim gleichgerichteten Motorstrom $I_a$ in den Nulldurchgang, da von der Meßanordnung 1 der gleichgerichtete Motorstrom $I_a$ erfaßt wird. Der $I_a$ - Abfall wird von der Meßanordnung 1 erkannt und der Referenzstromwert $I_{a0}$ zum Zeitpunkt $t_1$ als der letzte Abtastwert vor dem Abfall bestimmt. Die Meßanordnung 1 erfaßt spätestens ab dem Befehl zur Umkehr der Bewegungsrichtung ($t_0$) bereits den gleichgerichteten Motorstrom $I_a$. Es ist natürlich auch eine permanente Erfassung des Motorstroms $I_M$ oder des gleichgerichteten Motorstrom $I_a$ denkbar, sofern dies für andere Anwendung sinnvoll erscheint.

Der Stromschwellwert $S_I$ dient zur Ausschließung vorzeitiger störungsbedingter lokaler Strommaxima und kann zwar auch im einfachsten Fall fest vorgegeben werden, wird jedoch bevorzugt aus dem Referenzstromwert $I_{a0}$ abgeleitet, um eine bessere Anpassung an den Belastungszustand des Motors M zu ermöglichen. So kann der Zeitpunkt $T_R$ der Umkehr der Bewegungsrichtung auch bestimmt werden, in dem die Recheneinheit ein Motorzustandsmodell nachbildet und der Zeitpunkt bestimmt wird, an dem sich die Drehzahl zu Null ergibt. Das Motorzustandsmodell kann dabei das physikalisch-theoretische Motorzustandsmodell in Form der Differentialgleichung zweiter Ordnung umfassen, für das der Zeitpunkt des Nullpunktes der Drehzahl auf einen Spannungssprung um $\pm 2 U_B$ bei entsprechenden aktuellen Werten der Drehzahl und Motorspannung bestimmt wird. Wesentlich ist hierbei jedoch der Ansatz, daß sich das Lastmoment für die Zeitdauer der Umkehr nicht oder nur unwesentlich verändert. Anderenfalls müßte für die Berechnung auch noch das Lastmoment bestimmt werden, da es sich aus dem Verhalten von Motorstrom und -spannung im Übergangsbereich nicht ermitteln läßt. Der Rechenaufwand für das Motorzustandsmodell kann durch Verwenden von Konstanten und einer Differenzengleichung sowie unter Vernachlässigung von Termen mit kleiner Amplitude und langsamer Zeitkonstante weiter vereinfacht werden.

In der weitreichendsten Vereinfachung ergibt sich der Stromschwellwert $S_I$ direkt aus einem Referenzstromwert $I_{a0}$, der aus dem Motorstrom $I_M$ jeweils unmittelbar vor dem Abfallen in den Vorzeichenwechsel bestimmt wird, so daß der ermittelte Referenzstromwert $I_{a0}$ den Stromschwellwert $S_i$ für die Auswahl des folgenden Motorstrommaximums $I_{as}$ angibt, um eine bessere Anpassung an den Belastungszustand des Motors M zu ermöglichen.

Immer nach dem Vorzeichenwechsel des Motorstroms $I_M$ bzw. nach dem Nullpunkt des gleichgerichteten Motorstroms $I_a$ wird der Zeitpunkt $t_4$ des Motorstrommaximums $I_{as}$ bestimmt. Dabei kommt bevorzugt ein Vergleich zweier benachbarter Abtastwerte des Motorstroms zum Einsatz. Um durch Störungen bedingte Fehler, bspw. kleine lokale Minima zum Zeitpunkt $t_3$ in Fig. 2 angedeutet, auszuschließen, wird bevorzugt nur das Strommaximum an die Auswertelogik 2 weitergeleitet, welches über dem Stromschwellwert $S_I$ liegt. Grundgedanke der Erfindung ist nun, in Abhängigkeit von dem Zeitpunkt $t_4$ des Motorstrommaximums $I_{as}$ den Zeitpunkt $T_R$ der Umkehr der Bewegungsrichtung zu bestimmen. Dies erfolgt bspw. durch eine vorgegebene Tabelle, in der der Zeitdauer $\Delta t_S$ zwischen dem Zeitpunkt $t_o$ des Befehls zur Bewegungsrichtungsänderung und Zeitpunkt des Motorstrommaximums $I_{as}$ jeweils eine Zeitdauer $\Delta t_R$ zwischen dem Zeitpunkt $t_o$ des Befehls zur Bewegungsrichtungsänderung und dem Zeitpunkt der Umkehr der Bewegungsrichtung $T_R$ zugeordnet ist.

**Patentansprüche**

1. Verfahren zur Erkennung der Position und der Bewegungsrichtung eines bewegbar gelagerten Teils an einem elektrischen Motor, insbesondere einer Motor- oder Getriebewelle,
   unter Verwendung eines einkanaligen Sensors (HS), dessen digitales Signal (S) in einer Auswertelogik (2) einer Recheneinheit bewertet wird, wobei die Signalflanken des digitalen Signals (S) der Auswertung zugrundegelegt werden, und
   bei dem im Falle einer durch Umschalten der Motorspannung ($U_M$) erzwungenen, mit einem Vorzeichenwechsel des Motorstroms ($I_M$) verbundenen Umkehr der Bewegungsrichtung des bewegbar gelagerten Teils von einer alten Bewegungsrichtung in eine neue, entgegengesetzte Bewegungsrichtung die Zuordnung der Signalflanken des digitalen Signals (S) zu einer Bewegungsrichtung erfolgt, indem

   a) spätestens ab dem Zeitpunkt ($t_0$) des Befehls zum Umschalten der Motorspannung ($U_M$) der Motorstrom ($I_M$) von einer Meßanordnung (1), die mit der Auswertelogik (2) verbunden ist, erfaßt wird

b) daraus ein Zeitpunkt der Richtungsumkehr ($T_R$) ermittelt wird, und

c) die Signalflanken vor dem ermittelten Zeitpunkt der Richtungsumkehr ($T_R$) noch der alten Bewegungsrichtung und die nach dem ermittelten Zeitpunkt der Richtungsumkehr ($T_R$) auftretenden Signalflanken der neuen Bewegungsrichtung zugeordnet werden.

2. Verfahren nach Anspruch 1, **dadurch gekennzeichnet, daß** der Zeitpunkt ($t_4$) eines Motorstrommaximums ($I_{as}$) bestimmt wird, indem die Meßanordnung (1) einen gleichgerichteten Motorstrom ($I_a$) abtastet und nach dem Vorzeichenwechsel des Motorstroms ($I_a$) so lange jeweils wenigstens zwei direkt aufeineinander folgende Abtastwerte des Motorstroms ($I_a$) miteinander vergleicht, bis ein Absinken des Motorstroms ($I_a$) einsetzt.

3. Verfahren nach Anspruch 2, **dadurch gekennzeichnet, daß** ein Motorstrommaximum ($I_{as}$) nur dann an die Auswertelogik (2) gemeldet wird, wenn es einen vorgegebenen Stromschwellwert ($S_I$) überschreitet.

4. Verfahren nach Anspruch 3, **dadurch gekennzeichnet, daß**

- ein Referenzstromwert ($I_{a0}$) als derjenige Abtastwert bestimmt wird, der unmittelbar vor dem Abfallen des gleichgerichteten Motorstroms ($I_a$) in den Vorzeichenwechsel liegt und
- bei jeder Umkehr der Bewegungsrichtung der Stromschwellwert ($S_I$) neu aus dem jeweils aktuellen Referenzstromwert ($I_{a0}$) abgeleitet wird.

5. Verfahren nach Anspruch 4, **dadurch gekennzeichnet, daß** der Referenzstromwert ($I_{a0}$) dann vorliegt, wenn unmittelbar vor dem Abfallen des gleichgerichteten Motorstroms ($I_a$) in den Vorzeichenwechsel ein direkt nachfolgender Abtastwert um einen vorgegebenen Differenzwert kleiner als der vorangegangene Abtastwert ist.

6. Verfahren nach Anspruch 4 oder 5, **dadurch gekennzeichnet, daß** der Stromschwellwert ($S_I$) jeweils dem aktuellen Referenzstromwert ($I_{a0}$) gleichgesetzt wird.

7. Verfahren nach Anspruch 3, **dadurch gekennzeichnet, daß** der Stromschwellwert ($S_I$) abgeleitet wird, indem neben dem Motorstrom ($I_M$) auch die Motorspannung ($U_M$) von der Meßanordnung (1) bereits vor dem Vorzeichenwechsel des Motorstroms ($I_M$) erfaßt wird, wobei

a) der Recheneinheit auch das digitale Signal des einkanaligen Sensors (HS) zugeführt wird und diese aus dem zeitlichen Abstand zweier aufeinanderfolgender Signalflanken die aktuelle Motordrehzahl ($n_M(t)$) bestimmt,

b) und aus der Motordrehzahl, der Motorspannung und dem Motorstrom ($I_M$) unmittelbar vor dem Abfall in den Vorzeichenwechsel der Stromschwellwert ($S_I$) bestimmt wird.

8. Verfahren nach Anspruch 7, **dadurch gekennzeichnet, daß**

a) die Recheneinheit ein Motorzustandsmodell nachbildet,

b) angenommen wird, daß das Lastmoment sich nach dem Vorzeichenwechsel des Motorstroms ($I_M$) nur unwesentlich ändert,

c) aus den aktuellen Werten der Drehzahl ($n_M(t)$), der Motorspannung ($U_M$) und dem Motorstrom ($I_M$) unmittelbar vor dem Abfall in den Vorzeichenwechsel ein Stromwert ermittelt wird, für den sich bei konstant angenommenem Lastmoment und einer Umpolung der Motorspannung die Drehzahl zu Null ergibt, und

d) aus diesem Stromwert der Stromschwellwert ($S_I$) abgeleitet wird.

9. Verfahren nach Anspruch 8, **dadurch gekennzeichnet, daß** die Recheneinheit zumindest die physikalischen Größen $2\pi J$, wobei J für das Masse-Trägheitsmoment der gesamten rotierenden Anordnung steht, und $c\Phi$, wobei c für die Motorkonstanten und $\Phi$ für den magnetischen Fluß steht, fest vorgibt.

10. Verfahren nach Anspruch 9, **dadurch gekennzeichnet, daß** die Recheneinheit in Verbindung mit der Meßanordnung (1) bei jedem Anlaufen des Motors (M) aus dem Stand noch vor dem Überwinden der Haftreibung den ohmschen Widerstand des Motors (M) aus der Motorspannung ($U_M$) geteilt durch den Motorstrom ($I_M$) näherungsweise bestimmt.

11. Verfahren nach einem der Ansprüche 2 bis 10, **dadurch gekennzeichnet, daß** der gleichgerichtete Motorstrom ($I_a$) über einem Widerstand (R) gewonnen wird, wozu der Widerstand (R) einerseits mit einem Bezugspotential (Masse) und andererseits mit den Schaltmitteln ($S_1$, $S_2$) verbunden ist, und zum Zeitpunkt ($t_2$) des Vorzeichenwechsels des Motorstroms ($I_M$) der Nullpunkt des gleichgerichteten Motorstroms ($I_a$) von der Meßanordnung (1) erfaßt wird.

## Claims

1. Method for recognizing the position and the moving direction of an electricmotor part that movably runs on bearings, in particular of a motor or gear shaft; using a single-channel sensor (HS) whose digital signal (S) is evaluated in a scoring logic (2) of an arithmetic-logic unit, wherein the evaluation is based on the signal edges of the digital signal (S); and

in which, in the event of a reversal of the moving direction of the part that movably runs on bearings from an old moving direction to a new, opposite moving direction that is forced by changing over the motor voltage ($U_M$) and associated with a change of sign of the motor current ($I_M$), the signal edges of the digital signal (S) are assigned to a moving direction by

    a) picking up the motor current ($I_M$) by a set-up of measuring instruments (1) connected to the scoring logic (2) from the instant ($t_0$) of the instruction to change over the motor voltage ($U_M$) at the latest;
    b) determining an instant of reversal of direction ($T_R$) from that; and
    c) assigning to the old moving direction the signal edges occurring before the determined instant of reversal of direction ($T_R$) and assigning to the new moving direction the signal edges occurring after the determined instant of reversal of direction ($T_R$).

2. Method according to claim 1, **characterized in that** the instant ($t_4$) of a motor current maximum ($I_{as}$) is determined **in that** the set-up of measuring instruments (1) samples a rectified motor current ($I_a$) and after the change of sign of the motor current ($I_a$) compares at least two immediately successive sampled values of the motor current ($I_a$) a time until the motor current ($I_a$) starts to drop.

3. Method according to claim 2, **characterized in that** a motor current maximum ($I_{as}$) is indicated to the scoring logic (2) only if it exceeds a predetermined current threshold value ($S_I$).

4. Method according to claim 3, **characterized in that**

    - a reference current value ($I_{a0}$) is determined as the sampled value that lies immediately before the drop of the rectified motor current ($I_a$) into the change of sign; and
    - with each reversal of the moving direction, the current threshold value ($S_I$) is derived anew from the respective valid reference current value ($I_{a0}$).

5. Method according to claim 4, **characterized in that** the reference current value ($I_{a0}$) is given when, immediately before the drop of the rectified motor current ($I_a$) into the change of sign, an immediately subsequent sampled value is smaller than the previous sampled value by a predetermined differential value.

6. Method according to claim 4 or 5, **characterized in that** the current threshold value ($S_I$) is equated with the valid reference current value ($I_{a0}$) in each case.

7. Method according to claim 3, **characterized in that** the current threshold value ($S_I$) is derived **in that** the set-up of measuring instruments (1) also picks up the motor voltage ($U_M$) in addition to the motor current ($I_M$) already before the change of sign of the motor current ($I_M$), wherein

    a) the arithmetic-logic unit is also supplied with the digital signal of the single-channel sensor (HS) and determines the valid motor speed ($n_M(t)$) from the time interval between two successive signal edges;
    b) and the current threshold value ($S_I$) is determined from the motor speed, the motor voltage and the motor current ($I_M$) immediately before the drop into the change of sign.

8. Method according to claim 7, **characterized in that**

    a) the arithmetic-logic unit simulates a motor state model;
    b) it is assumed that the load moment changes only insignificantly after the change of sign of the motor current ($I_M$);
    c) a current value is determined from the valid values of the speed ($n_M(t)$), the motor voltage ($U_M$) and the motor current ($I_M$) immediately before the drop into the change of sign, for which current value the speed is zero assuming that the load moment is constant and when the polarity of the motor voltage is reversed; and
    d) the current threshold value ($S_I$) is derived from this current value.

9. Method according to claim 8, **characterized in that** the arithmetic-logic unit defines as fixed quantities at least the physical quantities $2\pi J$, wherein J represents the moment of inertia of the whole rotating arrangement, and $c\Phi$, wherein c represents the motor constants and $\Phi$ the magnetic flux.

10. Method according to claim 9, **characterized in that** the arithmetic-logic unit, in connection with the set-up of measuring instruments (1), approximately determines the ohmic resistance of the motor (M) from the motor voltage ($U_M$) divided by the motor current ($I_M$) with each start of the motor (M) from a standing start before static friction has been overcome.

11. Method according to any one of claims 2 to 10, **characterized in that** the rectified motor current ($I_a$) is obtained above a resistor (R), for which purpose the resistor (R) is connected to a reference potential (earth) on the one hand and to the switching means

$(S_1, S_2)$ on the other hand; and the set-up of measuring instruments (1) picks up the neutral point of the rectified motor current $(I_a)$ at the instant $(t_2)$ of the change of sign of the motor current $(I_M)$.

**Revendications**

1. Procédé de détection de la position et du sens de déplacement d'une pièce mise sur palier de façon mobile sur un moteur électrique, en particulier un arbre moteur ou de transmission,
   avec utilisation d'un capteur à une voie (HS) dont le signal numérique (S) est analysé dans une logique d'analyse (2) d'une unité de calcul, les flancs de signal du signal numérique (S) servant de base à l'analyse, et
   dans lequel l'affectation des flancs de signal du signal numérique (S) à un sens de déplacement intervient dans le cas d'une inversion du sens de déplacement de la pièce mise sur palier de façon mobile depuis un ancien sens de déplacement vers un nouveau sens de déplacement opposé, inversion obtenue par la commutation de la tension de moteur $(U_M)$ et associée à un changement de signe du courant de moteur $(I_M)$, par le fait que,

   a) au plus tard à partir de l'instant $(t_0)$ de l'instruction de commutation de la tension de la tension de moteur $(U_M)$, le courant de moteur $(I_M)$ est détecté par un dispositif de mesure (1) qui est raccordé à la logique d'analyse (2),
   b) un instant de l'inversion de sens $(T_R)$ est déterminé à partir de cela, et
   c) les flancs de signal avant l'instant déterminé de l'inversion de sens $(T_R)$ sont encore affectés à l'ancien sens de déplacement, et les flancs de signal apparaissant après l'instant déterminé de l'inversion de sens $(T_R)$ sont affectés au nouveau sens de déplacement.

2. Procédé selon la revendication 1, **caractérisé en ce que** l'instant $(t_4)$ d'un maximum du courant de moteur $(I_{as})$ est déterminé par le fait que le dispositif de mesure (1) échantillonne un courant de moteur redressé $(I_a)$ et, après le changement de signal du courant de moteur $(I_a)$, respectivement au moins deux valeurs d'échantillonnage successives du courant de moteur $(I_a)$ sont comparées l'une à l'autre jusqu'à ce que commence une diminution du courant de moteur $(I_a)$.

3. Procédé selon la revendication 2, **caractérisé en ce qu'**un maximum du courant de moteur $(I_{as})$ n'est signalé à la logique d'analyse (2) que lorsqu'il dépasse une valeur de seuil de courant prédéfinie $(S_I)$.

4. Procédé selon la revendication 3, **caractérisé en ce que**

   - une valeur de courant de référence $(I_{a0})$ est définie en tant que la valeur d'échantillonnage qui est située juste avant la chute du courant de moteur redressé $(I_a)$ vers le changement de signe, et **en ce que**
   - lors de chaque inversion du sens de déplacement, la valeur de seuil de courant $(S_I)$ est dérivée une nouvelle fois à partir de la valeur de courant de référence $(I_{a0})$ respectivement actuelle.

5. Procédé selon la revendication 4, **caractérisé en ce que** la valeur de courant de référence $(I_{a0})$ est présente quand, juste avant la chute du courant de moteur redressé $(I_a)$ vers le changement de signe, une valeur d'échantillonnage qui suit directement est inférieure, d'une valeur différentielle prédéfinie, à la valeur d'échantillonnage précédente.

6. Procédé selon la revendication 4 ou 5, **caractérisé en ce que** la valeur de seuil de courant $(S_I)$ est respectivement rendue égale à la valeur de courant de référence $(I_{a0})$ actuelle.

7. Procédé selon la revendication 3, **caractérisé en ce que** la valeur de seuil de courant $(S_I)$ est dérivée par le fait que, outre le courant de moteur $(I_M)$, la tension de moteur $(U_M)$ également est saisie par le dispositif de mesure (1) dès avant le changement de signe du courant de moteur $(I_M)$,

   a) le signal numérique du capteur à une voie (HS) étant également conduit à l'unité de calcul, et celle-ci définissant, à partir de l'intervalle de temps de deux flancs de signal successifs, le régime de moteur $(n_M(t))$ actuel,
   b) et, la valeur de seuil de courant $(S_I)$ étant définie à partir du régime moteur, de la tension de moteur et du courant de moteur $(I_M)$ juste avant la chute vers le changement de signe.

8. Procédé selon la revendication 7, **caractérisé en ce que**

   a) l'unité de calcul reproduit un modèle d'état du moteur,
   b) il est supposé que le moment de charge ne varie que de façon insignifiante après le changement de signe du courant de moteur $(I_M)$,
   c) à partir des valeurs actuelles du régime $(n_M(t))$, de la tension de moteur $(U_M)$ et du courant de moteur $(I_M)$ juste avant la chute vers le changement de signe, il est déterminé une valeur de courant pour laquelle, pour un moment de charge supposé constant et une inversion de polarité de la tension de moteur, il s'avère un régime nul, et

d) la valeur de seuil de courant ($S_I$) est dérivée de cette valeur de courant.

9. Procédé selon la revendication 8, **caractérisé en ce que** l'unité de calcul paramètre de façon fixe au moins les grandeurs physiques $2_\Pi J$, J représentant le moment inertie-masse de l'ensemble du dispositif tournant, et $c\Phi$, c représentant les constantes de moteur et $\Phi$ le flux magnétique.

10. Procédé selon la revendication 9, **caractérisé en ce que** l'unité de calcul, en liaison avec le dispositif de mesure (1), pour chaque démarrage du moteur (M), à partir de l'état précédant encore le franchissement du frottement statique, définit approximativement la résistance ohmique du moteur (M) à partir de la tension de moteur ($U_M$) divisée par le courant de moteur ($I_M$).

11. Procédé selon une des revendications 2 à 10, **caractérisé en ce que** le courant de moteur redressé ($I_a$) est obtenu via une résistance, et à cet effet la résistance (R) est connectée d'une part à un potentiel de référence (masse) et, d'autre part, aux moyens de commutation ($S_1$, $S_2$), et à l'instant ($t_2$) du changement de signe du courant de moteur ($I_M$), le point zéro du courant de moteur redressé ($I_a$) est détecté par le dispositif de mesure (1).

FIG.1

FIG. 2